Europäisches Patentamt

European Patent Office

Office européen des brevets

(11) Publication number: **0 119 595 B1**

# EUROPEAN PATENT SPECIFICATION

(45) Date of publication of patent specification: **26.07.89**

(51) Int. Cl.⁴: **C 01 B 31/00,** C 25 B 1/00, H 01 M 4/58, H 01 M 6/16

(21) Application number: **84102806.1**

(22) Date of filing: **14.03.84**

(54) **Fluorinated graphites, a process for their production and an electric cell using the same as active material of the positive electrode.**

(30) Priority: **16.03.83 JP 42230/83**
**05.04.83 JP 58644/83**
**09.06.83 JP 101701/83**
**22.06.83 JP 110999/83**
**19.07.83 JP 130355/83**

(43) Date of publication of application:
**26.09.84 Bulletin 84/39**

(45) Publication of the grant of the patent:
**26.07.89 Bulletin 89/30**

(84) Designated Contracting States:
**DE FR GB IT**

(56) References cited:
**US-A-3 514 337**

**CHEMICAL ABSTRACTS, vol. 96, no. 12, 22nd March 1982, page 572, no. 93908x, Columbus, Ohio, US; F. BECK et al.: "Reversible electrochemical formation of graphite fluorides from aqueous hydrofluoric acid", & ANGEW. CHEM. 1982, 94(1), 83-4**

(73) Proprietor: **Asahi Kasei Kogyo Kabushiki Kaisha**
**2-6, Dojimahama 1-chome Kita-ku**
**Osaka-shi Osaka 530 (JP)**

(72) Inventor: **Suematsu, Kazumi**
**3984-19, Imaizumi**
**Fuji-shi Shizuoka-ken (JP)**
Inventor: **Soutome, Kaoru**
**Oxbow Inn 4333 Yellowston Avenue**
**Pocatello Idaho 83201 (US)**
Inventor: **Arakawa, Tatsumi**
**3-27, Fujimidai 4-chome**
**Fuji-shi Shizuoka-ken (JP)**
Inventor: **Saito, Shigeakira**
**AsahiKasei-Dai 5-Fujiryo 100, Kawanarijima**
**Fuji-shi Shizuoka-ken (JP)**
Inventor: **Fukuoka, Masayuki**
**Endo-Apartment A-15 68, Aoshima-cho**
**Fuji-shi Shizuoka-ken (JP)**

(74) Representative: **Schübel-Hopf, Ursula et al**
**Strehl Schübel-Hopf Groening Schulz**
**Patentanwälte Maximilianstrasse 54 Postfach 22 14 55**
**D-8000 München 22 (DE)**

(56) References cited:
**SOLID STATE IONICS, vol. 1, nos. 1,2, April 1980, pages 87-110, North-Holland Publishing Co., Amsterdam, NL; N. WATANABE: "Two types of graphite fluorides (CF)n and (C2F)n, and discharge characteristics and mechanisms of electrodes of (CF)n and (C2F)n in lithium batteries"**

## Description

Technical field

The present invention relates to a novel fluorinated graphite, a process for the production of the same and an electric cell comprising the same as an active material of the positive electrode.

Background art

As fluorinated graphites there are known polymeric fluorinated graphites having the formula of $(CF)_n$ [hereinafter referred to "$(CF)_n$"] and those having the formula $(C_2F)_n$ [hereinafter referred to "$(C_2F)_n$"] which are produced by allowing fluorine gas to react with a graphite material in a vessel maintained at a temperature of 350°C to 600°C (U.S. Patent 4,139,474 to Watanabe et al.).

Watanabe (Solid State Ionics (1980), 1, 87 to 110) also describes the formation of two types of graphite fluorides, $(CF)_n$ and $(C_2F)_n$ from natural graphite and fluorine gas and examines the products by XRD, ESCA, IR, TG etc. and the performance of these graphite fluorides as active electrode materials in lithium battery cells. Also US—A—3 514 337 (Brauer et al.) relates to a high energy density battery using an organic electrolyte and lithium as the anode. The cathode has as the active material graphite-fluorine intercalation compounds of the general formula $(C_xF)_n$; x=3.5 to 7.5 and wherein n refers to the presence of an infinite number of recurring $(C_xF)$ groups in the intercalation compounds. These compounds can be prepared by reacting graphite with a mixture of fluorine and hydrogen fluoride at room temperature. The article by Beck et al. (Chemical Abstracts (1982), 96, 12, 572, 93908x.) also relates to the formation of graphite-fluorine intercalation compounds. These compounds are prepared by the electrochemical fluorination of highly crystalline natural graphite using aqueous HF in the concentration range of 5 to 50 molar HF at low overvoltages. Graphite compounds of the type $(C_n + HF_2 \cdot 2H_2F_2)_x$ with $n \geq 24$ can be formed by this method. It is further known that fluorinated graphites having the formula of $(C_xF)_n$ wherein x is a numerical value of 3.6 to 4.0 can be produced by allowing a mixed gas of fluorine and hydrogen fluoride to react with a carbon material [Chem. Ber., vol. 80, page 413 (1947)].

In the production of these fluorinated graphites, however, excessive fluorine gas must be employed and also high temperatures are often required. Since such high temperatures as above are near the dissociation temperature of the C—F bond, great efforts must be made to obtain the products at high yields. Moreover, under such conditions the corrosion of the reaction vessel is large, and thus it may be said that these processes are disadvantageous for a production of fluorinated graphites in an industrial scale.

On the other hand, active materials for a positive electrode of an electric cell of high performance are required to have a high electromotive force, a high open circuit voltage and, in addition, a small overvoltage on discharge, a good flat characteristic of the discharge curve and a large discharge capacity per unit weight per se when they are used in combination with an appropriate negative electrode. Furthermore, the active materials are required to be neither decomposed nor dissolved in the electrolyte of an electric cell and have to be stable for a long period of time.

It is considered that the positive electrode active material containing fluorine which is an element having the highest positive standard potential among all the elements can provide a small-sized, light-weight electric cell having a high voltage and a high energy density in combination with an appropriate negative electrode. The active materials for the positive electrode of such an electric cell which have been widely studied include fluorides of copper, nickel, silver, etc., $(CF)_n$ and $(C_2F)_n$. The copper fluoride and the nickel fluoride have a high theoretical energy density and exhibit an open circuit voltage as high as at least 3V when used together with lithium metal as a negative electrode, but disadvantageously they are unstable in the electrolyte and the self-discharge is so remarkable that the discharge capacity is greatly decreased in a few days. Further, the overvoltage on discharge is large and the uniformity of discharge voltage is poor. Thus, the cells using the copper fluoride and the nickel fluoride as the active material for a positive electrode have not yet been of practical use. On the other hand, $(CF)_n$ and $(C_2F)_n$ are excellent active materials for a positive electrode which provide an open circuit voltage as high as 3.2V and an excellent uniformity of discharge voltage and are stable in an electrolyte for a long period of time in combination with lithium metal as a negative electrode. However, with $(CF)_n$ the overvoltage on discharge is large, and a large potential drop at a high load discharge can be observed. With $(C_2F)_n$ the overvoltage on discharge is smaller than that of $(CF)_n$, and $(C_2F)_n$ is accordingly more useful, but the time for recovering the open circuit voltage after a high load discharge is long. Thus, optimum active materials for a positive electrode are still desired.

The present inventors have therefore made extensive studies to develop an industrially advantageous process for producing fluorinated graphites avoiding the defects of the conventional techniques. As a result, the inventors have found that this purpose can be accomplished by electrolytically fluorinating a carbon material in hydrogen fluoride and that the fluorinated graphite thus produced is a novel substance and exhibits novel discharge characteristics when used as an active material for a positive electrode of an electric cell.

Brief description of drawings

Figure 1 shows the X-ray diffraction pattern of a typical fluorinated graphite in Example 1 of the present invention;

Figure 2 shows the IR spectrum of a typical fluorinated graphite in Example 10 of the present invention;

Figure 3 is a cross-sectional view of a typical button cell of the present invention;

Figure 4 is a curve showing a discharge characteristic of a button electric cell using a typical fluorinated graphite in Example 7 of the present invention as an active material for a positive electrode;

Figure 5 is a group of curves showing discharge characteristics of the cells using the fluorinated graphite treated with a variety of alkalis or potassium iodide or the untreated fluorinated graphite of Example 24 of the present invention as a positive electrode active material immediately after their preparation; and

Figure 6 is a group of curves showing discharge characteristics of the same electric cells of Example 24 of the present invention after their storage at 60°C for one month.

Disclosure

The present invention relates to a fluorinated graphite having the formula $(C_xF)_n$ wherein x is a numerical value of about 2.0 to about 5.5 and n refers to an idefinite number of the recurring $(C_xF)$ unit and having a crystalline structure exhibiting a peak at about 13.7° to about 15.0° in terms of an angle of $2\theta$ corresponding to the diffraction at the (001) plane in the X-ray diffraction pattern, a peak in the vicinity of 685.3 eV due to the $F_{1s}$ and two peaks in the vicinity of 287.5 eV and 284.3 eV due to the $C_{1s}$ in the spectrum of electron spectroscopy of chemical analysis (hereinafter referred to "ESCA") two peaks in the vicinity of 1100 $cm^{-1}$ and 1240 $cm^{-1}$ in the IR spectrum, an electric conductivity of at least about $10^{-8}\Omega^{-1}cm^{-1}$ and being thermally stable in air up to 200°C from the viewpoint concerning the X-ray diffraction pattern.

The present invention also relates to a process for producing a fluorinated graphite as described above which comprises subjecting a carbon material to electrolysis in hydrogen fluoride at a voltage of about 6.5V to about 15V at a temperature of about −40°C to about 100°C in the presence of an electrically conductive agent.

The present invention further relates to an electric cell which comprises a negative electrode using a light metal as an active material, an electrolyte and a positive electrode using, as an active material, the above described fluorinated graphite.

The present invention still further relates to an electric cell which comprises a negative electrode having a light metal as an active material, an electrolyte and a positive electrode having, as an active material, the fluorinated graphite treated with an alkali or potassium iodide.

Exemplary carbon materials which can be employed in the present invention are easily graphitizable carbons and include petroleum coke, pitch, meso-phase pitch, calcined polyvinyl chloride, carbon whisker, graphite obtained by heat treatment thereof and natural graphite. Among these carbon materials, meso-phase pitch, heat-treated meso-phase pitch and natural graphite are preferred, and heat-treated meso-phase pitch is more preferred.

The shape of the carbon material may be in the form of powder, flakes, granules, whiskers, fibers or sheets, and the carbon materials may be employed in layers or in bundles, and the size of these layers or bundles is not limited as long as their width is smaller than the effective electrode area. In order to increase the rate of reaction, the thickness or the diameter of a sheet of a fiber is preferably at most about 5 mm, more preferably at most 2 mm. Any amount of the carbon materials may be employed if they are provided within the effective electrode area.

The apparatus for producing the fluorinated graphite of the present invention may be typically made of copper, nickel, silver, stainless steel or any combination thereof and may have an anode and a cathode made of nickel, stainless steel or copper. The electrodes may be in the form of plates, nets or cocentric cylinders. It is preferred to employ cylindrical electrodes which have the following advantages:

(a) The fluorination of the carbon material proceeds rapidly and uniformly and thus the current efficiency can be improved, and the time period of the electrolysis can be shortened.

(b) The batchwise amount of the carbon material can be increased.

(c) The discharge characteristics of an electric cell using a fluorinated graphite as an active material of the positive electrode can be improved.

The cylindrical electrodes which can be preferably employed in the present invention are formed by a combination of two cylinders which are cocentrically placed and whose distance is uniform. The cylinders may not be necessarily circular and one electrode encircles the other electrode at a substantially equal distance. The cylinders may be porous or netlike, and part of the cylinders may be missing or the inner-positioned cylinder may be replaced by a rod.

The electrolytic fluorination according to the present invention proceeds at the anode. Accordingly, it is preferred that the carbon material be disposed on the anode or in the vicinity of the anode. As an exemplary method, the carbon material is uniformly spread on the anode and fixed with a net of polytetrafluoroethylene. In an electrolytic vessel there are charged the carbon material and hydrogen fluoride containing an electrically conductive agent, and electric power is applied under the prescribed conditions.

The electrolytic temperature employed is typically about −40°C to about 100°C, preferably about −30°C to 20°C. When the electrolytic temperature is lower than about −40°C, the velocity of electrolytic fluorination becomes lower which is unfavourable from the industrial view-point. On the other hand, when the temperature is higher than 100°C, the pressure of hydrogen fluoride is increased, and hence this is

4

inconvenient from the view-point of operating the electrolysis. The voltage applied is typically about 6.5V to about 15V, preferably about 7V to about 10V. When the voltage is lower than about 6.5V, the electric current density is decreased, and accordingly a long reaction time will be required for the electrolysis. On the other hand, when the voltage is higher than 15V, the operation of the electrolysis becomes dangerous, because of the extensive generation of fluorine gas.

The electrolytic fluorination of the present invention is conducted in an atmosphere of dried air, for example, treated with a dehydrating agent such as calcium chloride, potassium hydroxide and sulfuric acid, or in an inert gas such as nitrogen, argon and helium.

Exemplary electrically conductive agents which can be employed in the present invention include water and metal salts. When water is employed, it is preferred that the weight ratio of water to hydrogen fluoride be kept in the range of about 0.0001 to about 0.01. When the weight ratio of water to hydrogen fluoride is less than about 0.0001, the electrical conductivity becomes smaller and the current density is reduced and as a result, the electrolysis requires a long period of time. On the other hand, at weight ratios of water to hydrogen fluoride of more than about 0.01, the efficiency of fluorination is decreased and the properties of an electric cell containing the fluorinated graphite produced are adversely affected.

Exemplary metal salts which can be employed as the electrically conductive agent in the present invention include metal fluorides such as sodium fluoride, potassium fluoride, calcium fluoride and magnesium fluoride. In order to maintain an appropriate electrical conductivity and to prevent excess corrosion of the electrodes, the amount of the metal fluorides employed is preferably in the range of about 1% by weight to about 20% by weight based on the weight of the hydrogen fluoride.

In the production of the fluorinated graphite of the present invention the quantity of electricity applied is typically in the range of about $2\times10^3$ coulombs to about $1\times10^6$ coulombs per gram of the carbon material. The fluorination reaction proceeds very rapidly, and compounds having a composition of a certain range of a ratio of carbon to fluorine can be produced in a very short period of time.

The gloss of the product formed is slightly lost externally but the color and the shape of the starting carbon material are maintained in the products. Generally, the weight of the products shows an increase of about 30% to about 80% over that of the starting carbon material. The elementary analysis and the spectral analysis show that the product is a fluorinated carbon compound consisting of covalent bonds.

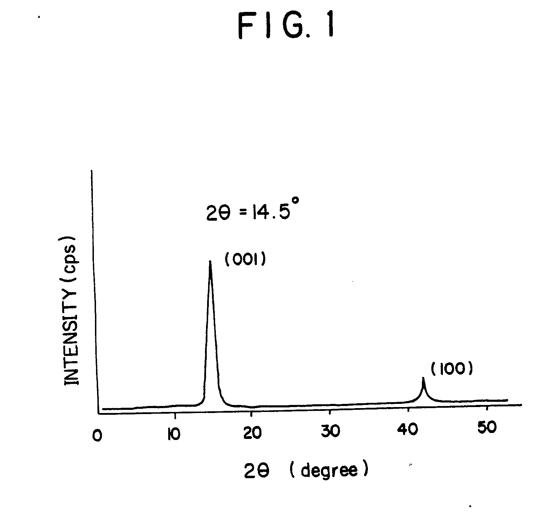

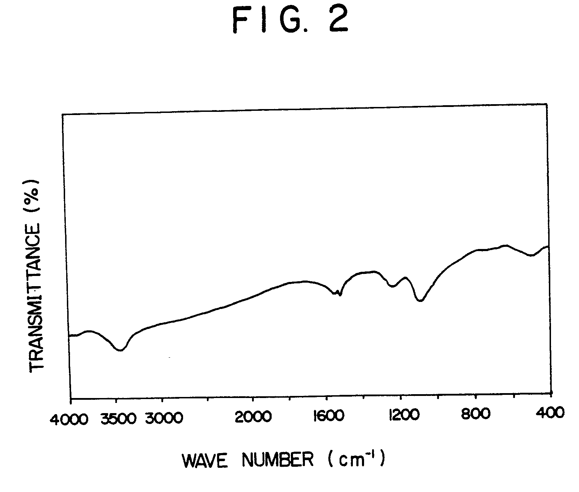

According to the elementary analysis the fluorinated graphite of the present invention has a composition of $(C_xF)_n$ wherein x is about 2.0 to about 5.5 and n refers to an indefinite number of the recurring $(C_xF)$ unit. According to the X-ray diffraction pattern a peak can be observed in the range of about 13.7° to about 15.0° in terms of an angle of 2θ corresponding to the diffraction at the (001) plane. This corresponds to an interlayer spacing of about 6.46A to about 5.90A. Figure 1 shows a representative example of the X-ray diffraction pattern of the fluorinated graphite of the present invention. It is preferred from the viewpoint of an active material for a positive electrode of an electric cell to employ the fluorinated graphite having a chemical composition of the formula $(C_xF)_n$ wherein x is a numerical value of about 2.0 to about 4.0 and n refers to an indefinite number of the recurring $(C_xF)$ unit and a crystalline structure exhibiting a peak at about 13.7° to about 14.8° in terms of an angle of 2θ corresponding to the diffraction at the (001) plane in the X-ray diffraction pattern. According to the ESCA spectrum of the fluorinated graphite of the present invention, a peak can be observed in the vicinity of 685.3 eV due to the $F_{1s}$ and two peaks in the vinicity of 287.5 eV and 284.3 eV due to the $C_{1s}$. The fluorinated graphite of the present invention has an electric conductivity of at least about $1\times10^{-8}$ (ohm.cm)$^{-1}$ and a thermal stability, i.e., no structural change occurring up to 200°C in air from the viewpoint concerning a X-ray diffraction pattern, and no weight loss being observed up to 400°C in a nitrogen atmosphere by the thermo-gravimetric analysis. The IR spectrum of the fluorinated graphite of the present invention shows two absorptions characteristic for the stretching vibration of the F—C bond in the vicinity of 1100 cm$^{-1}$ and 1240 cm$^{-1}$ and its pattern is different from the absorptions of the conventional fluorinated graphite. Figure 2 shows a representative IR spectrum of the fluorinated graphite of the present invention, and the intensity ratio of the peak in the vicinity of 1100 cm$^{-1}$ to the peak in the vicinity of 1240 cm$^{-1}$ varies depending upon the electrolysis conditions and the fluorination ratio.

Furthermore, when the fluorinated graphite of the present invention is treated with an alkali or potassium iodide and is employed as an active material for the positive electrode of a cell, the shelf life of the cell can be remarkably prolonged and the flatness of discharge curve can be markedly improved.

The alkalis which can be employed in the present invention may be any conventional alkali reagents and include, for example, sodium hydroxide, potassium hydroxide, an aqueous ammonia solution, aliphatic primary amines such as propylamine and butylamine, aliphatic secondary amines such as isopropylamine and isoamylamine, aliphatic tertiary amines such as t-butylamine and t-amylamine, aromatic primary amines such as aniline and benzylamine, aromatic secondary amines such as N - methylbenzylamine and N - ethylbenzylamine, aromatic tertiary amines such as benzyldiethylamine and heterocyclic amines such as pyridine and pyridazine. Among these alkalis, sodium hydroxide is especially preferred.

It is preferred that the alkali be employed as the aqueous solution having a concentration of the alkali of about 0.5% by weight to about 5% by weight. In case of a concentration of the alkali of less than about 0.5% by weight, the effect for treating the fluorinated graphite with the alkali cannot be exhibited satisfactorily. On the other hand, in case of a concentration of the alkali of more than about 5% by weight, there can be disadvantageously and unnecessarily caused a diffusion of fluorine into the solution potassium iodide is employed, it is preferred to employ an aqueous solution of potassium iodide of about 0.01N to about 0.1N. In case of using an aqueous solution of potassium iodide less than about 0.01N, the effect for treating the fluorinated graphite therewith cannot be satisfactorily exhibited. On the other hand, in case of using an aqueous solution of potassium iodide more than about 0.1N, the diffusion of fluorine into the solution can be disadvantageously caused. Among these aqueous solutions of the alkalis and potassium iodide it is preferred to employ an aqueous solution of sodium hydroxide having a concentration of about 0.5% by weight to about 5% by weight.

The treatment can be carried out by charging the fluorinated graphite of the present invention in the aqueous solution of the alkali or potassium iodide and stirring the mixture at room temperature (in the range of about 15°C to about 35°C) for a period in the range of about 5 minutes to about 2 hours and then subjecting it to filtration. The fluorinated graphite thus separated is thoroughly washed with water and dried in vacuum.

The positive electrode in the electric cell of the present invention may be prepared as follows. The fine powder of the fluorinated graphite of the present invention is thoroughly mixed with a binder such as powder or granule of polyethylene, a fluoropolymer such as polytetrafluoroethylene, a SBR resin and an expanded graphite, if necessary or if desired, together with an electrically conductive agent such as carbon powder and acetylene black in order to increase a short-circuit current. The mixture obtained is molded into a predetermined shape to form a positive electrode. The amount of the binder employed is typically in the range of about 1% by weight to about 20% by weight based on the weight of an active material. In case of the amount of the binder employed of less than 1% by weight, the binding effect cannot satisfactorily be exhibited. On the other hand, in case of the amount of more than 20% by weight, a volume fraction of an active material is decreased, and thus a decrease of a capacity of an electric cell is disadvantageously caused.

The active materials of a negative electrode of a cell which can be employed in the present invention are light metals or light metal alloys and include alkali metals such as lithium, sodium and potassium, alkaline earth metals such as calcium and magnesium, aluminum, any mixtures thereof, and alloys containing any of these metals as a main component. Among these metals, the alkali metals which have a low negative electrode potential are preferred, and lithium is more preferred.

The electrolyte which can be employed in the electric cell of the present invention depends upon a negative electrode metal employed and may be either of an aprotic organic solvent system or a protonic solvent system. Exemplary aprotic organic solvents for the electrolyte include γ - butyrolactone, propylene carbonate, ethylene carbonate, dimethylformamide, dimethyl sulfoxide, tetrahydrofuran, dimethyl sulfite, 1,2 - dimethoxyethane, methyl formate and acetonitrile. Exemplary protonic solvents for the electrolyte include water, ethylene glycol, glycerin, monochloroacetic acid and dichloroacetic acid. The concentration of the electrolyte is not critical and may be chosen so as to give a high electrical conductivity.

The solute of the electrolyte which can be employed in the present invention include various compounds such as $LiClO_4$, $LiBF_4$, $KPF_6$, $LiAlCl_4$ and any mixtures thereof.

In combination with lithium as an active material for a negative electrode, the electric cell of the present invention exhibits, as its characteric feature, an open circuit voltage of about 3.6V to about 4.0V and a discharge voltage at a constant resistance of 2.6KΩ of about 3.3V which are higher than those of the conventional electric cell using, for example, $(CF)_n$ and $(C_2F)_n$, respectively, as an active material for a positive electrode and, in addition, is excellent in uniformity of discharge voltage and exhibits a utility of about 100% and good stability for a long period of time. In this connection, the term "utility" means the ratio of the experimental discharge capacity to the theoretical capacity calculated from the amount of the active material for the negative electrode. Thus, the electric cell of the present invention is advantageously used in devices requiring a high voltage such as a watch, a clock, a small radio and a small computer.

The present invention is hereunder described in greater detail by reference to working examples, to which the scope of the present invention is by no means limited.

Example 1

The electrolytic vessel employed was a cylinder made of copper-nickel alloy having an internal volume of 660 ml equipped with a reflux condenser. An anode and a cathode employed as electrodes were both nickel plates having a thickness of 0.5 mm and the electrode distance was 0.5 cm and their effective area was 76 cm². On the anode 1.0 g of pitch type graphite monofilaments having a diameter of 10 μm whose X-ray spacing was 3.36Å and a length of 5 cm (trade mark "Thornel P-55S" manufactured by Union Carbide Corporation, U.S.A.) was uniformly spread and fixed with a polytetrafluoroethylene thread.

In the electrolytic vessel was charged 650 ml of hydrofluoric acid containing 1 ml of water, and the electrolysis was conducted in an argon atmosphere for 8 hours under the conditions that the average current density was 1.5A/cm², the voltage applied was 8V and the bath temperature was −20°C. The 100 ml of hydrofluoric acid containing 1 ml of water was additionally charged into the electrolytic vessel and the electrolysis was conducted further for 16 hours under the same conditions as described above. The total quantity of electricity applied was $13 \times 10^4$ coulomb per gram of the carbon monofilaments.

The color of the product obtained was maintained black, and the volume of the monofilaments was increased to give the monofilaments having a diameter of 14 μm and the increase in weight was 56%.

According to the elementary analysis, the contents of fluorine and carbon were 36% by weight and 64% by weight, respectively, which corresponded to a composition of $(C_{2.8}F)_n$. According to the X-ray diffraction pattern, a peak was observed at 14.5° (2θ) as shown Figure 1 and the peak of the starting carbon material at 26.5° (2θ) corresponding to the diffraction at the (002) plane was not observed, and the conversion of the carbon material was 100%. The product had an interlayer spacing of 6.10Å, and exhibited one peak at 1100 $cm^{-1}$ and another peak at 1200 $cm^{-1}$ in the IR spectrum, one peak at 685.1 eV due to the $F_{1s}$ and two peaks at 287.5 eV and 284.3 eV due to the $C_{1s}$ in the ESCA spectrum, and was stable up to 200°C in air from the viewpoint of a X-ray diffraction pattern and did not show weight loss up to 400°C in a nitrogen atmosphere. The color of the product was black and the electric conductivity was $0.5\Omega^{-1}cm^{-1}$.

Example 2

The procedures of Example 1 were repeated except that the electrolytic voltage was 9V, the average current density was $2.5A/dm^2$ and the total quantity of electricity applied was $21.6\times10^4$ coulomb. The product obtained was increased in weight by 64%. The elementary analysis showed that the product had a composition of $(C_{2.5}F)_n$. According to the X-ray diffraction pattern, a sharp peak was observed at 14.4°(2θ), and the conversion of the starting carbon material was 100%. The product had an interlayer spacing of 6.15Å, and exhibited one peak at 1080 $cm^{-1}$ and another peak at 1220 $cm^{-1}$ in the IR spectrum, one peak at 685.3 eV due to the $F_{1s}$ and two peaks at 287.4 eV and 284.1 eV due to the $C_{1s}$ in the ESCA spectrum, and did not change up to 200°C in air from the viewpoint of X-ray diffraction pattern. The temperature at which weight loss in a nitrogen atmosphere started was 400°C, the color of the product was black and the electric conductivity was $10^{-2}\Omega^{-1}cm^{-1}$.

Example 3

The procedures of Example 1 were repeated except that 0.5 g of a sheet having a thickness of 0.2 mm having been molded from a mixture of graphitized petroleum coke and 10% by weight of polytetrafluoroethylene powder was sticked on the anode as a carbon material and fixed with a polytetrafluoroethylene fiber. The increase in weight of the product was 69%. The elementary analysis showed that the product had a composition of $(C_{2.3}F)_n$. According to the X-ray diffraction pattern, a peak was observed at 14.3°(2θ), and the conversion of the starting carbon material was 100%. The product exhibited one peak at 1080 $cm^{-1}$ and another peak at 1230 $cm^{-1}$ in the IR spectrum, one peak at 685.5 eV due to the $F_{1s}$ and two peaks at 287.5 eV and 284.5 eV due to the $C_{1s}$ in the ESCA spectrum. The product was stable in air up to 200°C from the viewpoint of X-ray diffraction pattern. The initial temperature of thermally losing weight in air was 400°C, the color of the product was black and electric conductivity was $10^{-3}\Omega^{-1}cm^{-1}$.

Examples 4 to 10

The procedures of Example 1 were repeated except that graphitized whiskers obtained by the heat treatment of benzene at high temperatures having a diameter of 5 μm and a length of 1 to 5 cm were employed. The relationship between the total quantity of electricity applied and the product obtained is shown in Table 1.

TABLE 1

| Example No. | Amount of whiskers (g) | Total quantity of electricity applied (coulomb/g) | Composition of product | X-ray diffraction 2θ (degree) |
|---|---|---|---|---|
| 4 | 0.70 | 125,000 | $(C_{3.9}F)_n$ | 14.50 |
| 5 | 0.53 | 160,000 | $(C_{3.8}F)_n$ | 14.40 |
| 6 | 0.42 | 200,000 | $(C_{3.6}F)_n$ | 14.35 |
| 7 | 0.28 | 300,000 | $(C_{3.3}F)_n$ | 14.3 |
| 8 | 0.21 | 400,000 | $(C_{2.8}F)_n$ | 14.1 |
| 9 | 0.13 | 780,000 | $(C_{2.5}F)_n$ | 14.0 |
| 10 | 0.10 | 1,000,000 | $(C_{2.1}F)_n$ | 13.8 |

All the products were black in color and had an electric conductivity of $10^{-7}\Omega^{-1}cm^{-1}$ (Example 10) to $25^{-1}\Omega^{-1}cm^{-1}$ (Example 4), which shows the relationship that the electric conductivity was higher with a smaller extent of fluorination. Also they were thermally stable in air up to 200°C and showed two absorptions characteristic of the stretching vibration of F—C bond, i.e., one peak in the vicinity of 1100 cm$^{-1}$ and another peak in the vicinity of 1240 cm$^{-1}$ in the IR spectra, and one peak in the vicinity of 685.3 eV due to the $F_{1s}$ and two peaks in the vicinity of 287.5 eV and 284.3 eV due to the $C_{1s}$. Figure 2 illustrates the IR spectrum of the product obtained in Example 10.

Example 11

Around a cylinder made of nickel having a diameter of 3 cm was uniformly wound 0.8 g of pitch type carbon fibers having been heat-treated at 2700°C for 10 minutes, which was used as an anode. Outside of the anode was placed a cylinder made of nickel as a cathode at an electrode distance of 5 mm. The assembly thus formed was immersed in hydrofluoric acid containing 0.1% by weight of water, and the electrolysis was conducted at −20°C at a constant voltage of 8V for 4 hours. The total quantity of electricity applied was $8.2 \times 10^4$ coulomb. According to the elementary analysis, the product obtained had a composition of $(C_{3.0}F)_n$ and according to the X-ray diffraction pattern, it had a peak at 14.6°($2\theta$) and the conversion of the starting carbon material was 100%. The product exhibited one peak at 1100 cm$^{-1}$ and another peak at 1220 cm$^{-1}$ in the IR spectrum and one peak at 685.1 eV due to the $F_{1s}$ and two peaks at 287.8 eV and 284.6 eV due to the $C_{1s}$ in the ESCA spectrum. The electric conductivity of was $3.0\Omega^{-1}$cm$^{-1}$.

Examples 12 to 16

The procedures of Example 11 were repeated except that various carbon materials as set forth in Table 2 were employed and that the total quantity of electricity applied was $7.7 \times 10^4$ coulomb/g. The results are shown in Table 2.

TABLE 2

| Example No. | Carbon material | | Composition of product | X-ray diffraction $2\theta$ (degree) |
| --- | --- | --- | --- | --- |
| | Kind | Amount (g) | | |
| 12 | natural graphite | 1.0 | $(C_{2.8}F)_n$ | 14.4 |
| 13 | pitch type carbon fiber fabric | 1.0 | $(C_{3.3}F)_n$ | 14.65 |
| 14 | carbon whisker (diameter: 5 μm) | 0.2 | $(C_{2.8}F)_n$ | 14.3 |
| 15 | petroleum cokes having been treated at 2,600°C for 10 minutes | 1.0 | $(C_{4.0}F)_n$ | 14.65 |
| 16 | sheet graphite*) | 0.7 | $(C_{3.0}F_n$ | 14.5 |

*)Natural graphite was kneaded with polytetrafluoroethylene powder at a ratio of 10 W/W%, and the mixture was molded into a sheet having a thickness of 1000 μm.

All the products exhibited one peak in the vicinity of 1100 cm$^{-1}$ and another peak in the vicinity of 1240 cm$^{-1}$ in the IR spectrum and one peak in the vicinity of 685.3 eV due to the $F_{1s}$ and two peaks in the vicinity of 287.5 eV and 284.3 eV due to the $C_{1s}$ in the ESCA spectrum.

Examples 17 to 20

The procedures of Example 11 were repeated except that the electrolytic temperature was varied as set forth in Table 3 and that the amount of the carbon material used was 1.0 g. The results are shown in Table 3.

TABLE 3

| Example No. | Electrolytic temperature (°C) | Composition of product | X-ray diffraction $2\theta$ (degree) |
|---|---|---|---|
| 17 | −15 | $(C_{3.1}F)_n$ | 14.7 |
| 18 | −10 | $(C_{3.0}F)_n$ | 14.6 |
| 19 | −5 | $(C_{2.95}F)_n$ | 14.6 |
| 20 | 0 | $(C_{3.1}F)_n$ | 14.7 |

As is clearly understood from Table 3, the property of the products is hardly affected by the electrolytic temperature. All the products had an electric conductivity of around $5\Omega^{-1}cm^{-1}$ and excellent thermal stability.

Example 21

The procedures of Example 1 were repeated except that 15 g of sodium fluoride were employed as an electrically conductive agent instead of water. The product obtained showed an increase in weight by 50%. According to the X-ray diffraction pattern, a peak was observed at 14.7°($2\theta$), and the conversion of the starting carbon material was 100%. The product had an interlayer spacing of 6.03Å and was thermally stable in air up to 200°C and had an electric conductivity of $8\Omega^{-1}cm^{-1}$.

Example 22

The procedures of Example 1 were repeated except that 10 g of potassium fluoride were employed as an electrically conductive agent instead of water. The product obtained showed an increase in weight by 50% by weight. According to the elementary analysis, the product obtained had a composition of $(C_{4.2}F)_n$. According to the X-ray diffraction pattern, a peak was observed at 15.0°($2\theta$), and the conversion of the starting carbon material was 100%. The product had an interlayer spacing of 5.90Å and was thermally stable in air up to 200°C and had an electric conductivity of $15\Omega^{-1}cm^{-1}$.

Example 23

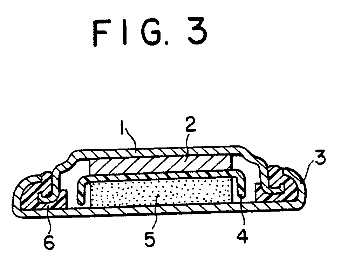

To 0.15 g of the fluorinated graphite having a composition of $(C_{3.3}F)_n$ as obtained in Example 7 was added 0.03 g of polytetrafluoroethylene powder and thoroughly mixed. The mixture was press-molded into a disc having a diameter of 15 mm and a thickness of 0.6 mm for using as a positive electrode. As a negative electrode was employed a disc sheet having a diameter of 15 mm and a thickness of 0.20 mm. A button cell as shown in Figure 3 was prepared. As shown in Figure 3, the electric cell comprised a stainless steel container 3 to the bottom of which a positive-electrode disc 5 was adhered with an electrically conductive adhesive, a stainless steel inverted cup 1 inside which the negative-electrode disc 2 of lithium was press-adhered and a separator 4 of a polypropylene unwoven fabric which was disposed between the positive electrode disc 5 and the negative electrode disc 2. After a $\gamma$ - butyrolactone solution containing 1 mol/liter of $LiBF_4$ was charged in the container 3 as an electrolyte, the container 1 was sealed within the open end of the container 3 by means of a plastic insulating gasket 6. The inverted cup 1 and the container 3 acted as the negative electrode terminal and the positive electrode terminal, respectively.

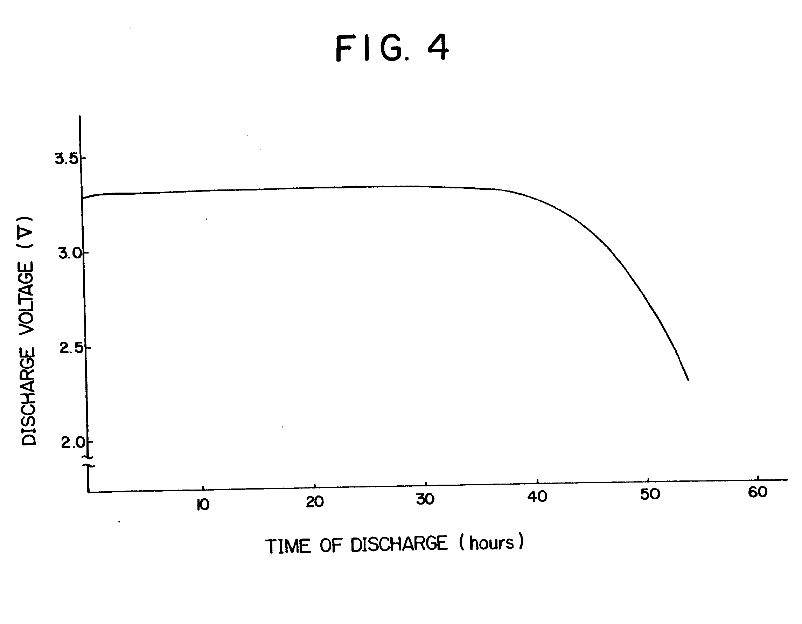

The open circuit voltage at 25°C of the electric cell thus prepared was 3.9V which was higher than that of 3.2V of the electric cell employing $(CF)_n$ as an active material for a positive electrode. The electric cell had an excellent flatness of discharge curve at constant-resistance of 3.3KΩ and maintained an average voltage of 3.3V which was a very high value compared to 2.65V of the electric cell employing $(CF)_n$ as an active material for a positive electrode, as shown in Figure 4.

Example 24

The fibers as obtained by the electrolytic fluorination in Example 13 were finely and sufficiently pulverized in a mortar, and 1 g of the fluorinated graphite thus obtained each as a sample was immersed in 10 ml of a 1% by weight aqueous sodium hydroxide solution, 10 ml of a 2% by weight aqueous ammonia solution, 10 ml of a 0.5% by weight aqueous pyridine solution and 10 ml of a 0.05N aqueous potassium iodide solution, respectively, and the mixtures thus obtained were stirred at 25°C for 30 minutes. In the case of the aqueous potassium iodide solution used, the mixture was stirred in a dark place at 25°C for 30 minutes and then was left to stand in the dark place at 5°C for one hour.

The samples immersed, respectively, in the aqueous sodium hydroxide solution, the aqueous ammonia solution and the aqueous pyridine solution were filtered off and sufficiently washed with ion-exchanged water until the filtrate became neutral, and then dried under vacuum. Similarly, the sample treated with potassium iodide was filtered off and sufficiently washed until potassium iodide was completely removed, and then dried under vacuum.

One gram of each kind of the four active materials for the positive electrode as obtained above and one untreated active material for the positive electrode which was the same fluorinated graphite as obtained in Example 13, respectively, were mixed with 0.2 g of polytetrafluoroethylene powder, and the mixtures were thoroughly kneaded and press-molded to give a disc having a diameter of 16 mm and a thickness of 1 mm, resulting in five kinds of the positive electrodes of electric cells. In the same manner as in Example 23, five button cells were prepared using the positive electrode as obtained above.

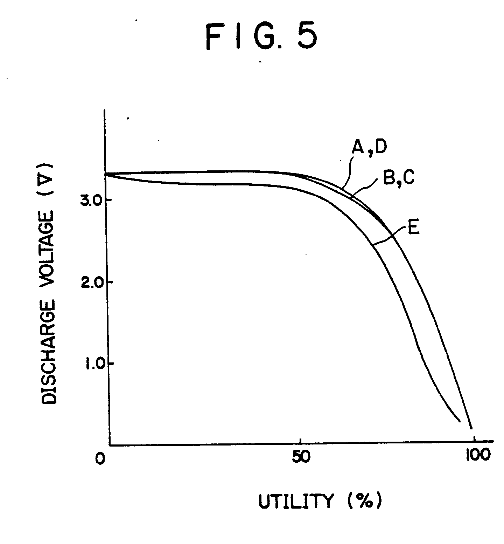

Figure 5 shows discharge curves of the electric cells at 25°C at a constant-resistance of 2.6 KΩ immediately after their preparation. In Figure 5, A, B, C and D show the discharge curves of the electric cells employing the fluorinated graphites having been treated with the 1% by weight aqueous sodium hydroxide solution, the 2% by weight aqueous ammonia solution, the 0.5% by weight aqueous pyridine solution and the 0.05N aqueous potassium iodide solution, respectively, as an active material for the positive electrode. For comparison, E shows the discharge curve of the electric cell employing the untreated fluorinated graphite as an active material for the positive electrode.

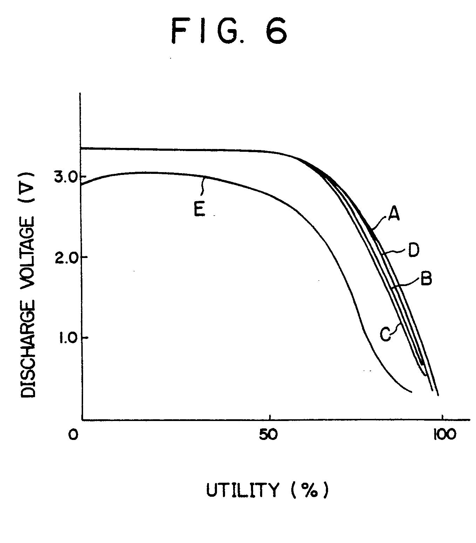

Figure 6 shows discharge curves of the same five electric cells described above at 25°C at a constant-resistance of 2.6 KΩ after their storage at 60°C for one month.

It is clearly understood from Figure 6 that the discharge characteristics and the shelf life can be remarkably improved by using the fluorinated graphites of the present invention treated with sodium hydroxide, ammonia, pyridine and potassium iodide, respectively, as an active material for the positive electrode of an electric cell.

Example 25

In the same manner as in Example 23, two button cells were prepared using the fluorinated graphite as obtained in Example 13 as an active material for the positive electrode and sodium or magnesium as the negative electrode. The discharge characteristics of the electric cells are shown in Table 4.

TABLE 4

| Negative electrode | Open circuit voltage (V) | Short circuit current (mA) | Discharge voltage at constant-resistance of 3.3KΩ (V) |
|---|---|---|---|
| Na | 3.6 | 28 | 3.1 |
| Mg | 3.3 | 35 | 3.0 |

These electric cells had a very high discharge voltage and a good flatness of discharge curve and the utility was about 100%.

**Claims**

1. A fluorinated graphite having the formula $(C_xF)_n$ wherein x is a numerical value of about 2.0 to about 5.5 and n refers to an indefinite number of the recurring $(C_xF)$ unit, characterized in that the fluorinated graphite has a crystalline structure exhibiting a peak at about 13.7° to about 15.0° in terms of an angle of 2θ corresponding to the diffraction at the (001) plane in the X-ray diffraction pattern, a peak in the vicinity of 685.3 eV due to the $F_{1s}$ and two peaks in the vicinity of 287.5 eV and 284.3 eV due to the $C_{1s}$ in the spectrum of electron spectroscopy of chemical analysis, two peaks in the vicinity of 1100 cm$^{-1}$ and 1240 cm$^{-1}$ in the IR spectrum, and an electric conductivity of at least about $10^{-8}\Omega^{-1}$cm$^{-1}$, and is thermally stable in air up to 200°C from the viewpoint concerning the X-ray diffraction pattern.

2. The fluorinated graphite of Claim 1 having the formula $(C_xF)_n$ wherein x is a numerical value of about 2.0 to about 4.0 and n refers to an indefinite number of the recurring $(C_xF)$ unit, and a crystalline structure exhibiting a peak at about 13.7° to about 14.8° in terms of an angle of 2θ corresponding to the diffraction at the (001) plane in the X-ray diffraction pattern.

3. A process for producing the fluorinated graphite of Claim 1 or Claim 2, which comprises subjecting a carbon material to electrolysis in hydrogen fluoride at a voltage of about 6.5V to about 15V at a temperature of about −40°C to about 100°C in the presence of an electrically conductive agent.

4. The process of Claim 3, wherein the electrically conductive agent is water or a metal salt.

5. The process of Claim 4, wherein the water is employed in a range of a weight ratio of water to the hydrogen fluoride of about 0.0001 to about 0.01.

6. The process of Claim 4, wherein the electrically conductive agent is a metal fluoride.

7. The process of Claim 6, wherein the metal fluoride is employed in an amount range of about 1% by weight to about 20% by weight based on the weight of the hydrogen fluoride.

8. The process of Claim 6 or 7, wherein the metal fluoride is sodium fluoride, potassium fluoride, calcium fluoride or magnesium fluoride.

9. The process of any of the Claims 3 to 8, wherein the electrolysis is conducted in dried air or an inert gas.

10. The process of Claim 9, wherein the inert gas is nitrogen, argon or helium.

11. The process of any of the Claims 3 to 10, wherein the voltage is about 7V to about 10V.

12. The process of any of the Claims 3 to 11, wherein the electrolysis temperature is about −30°C to about 20°C.

13. The process of any of the Claims 3 to 12, wherein the electrodes are concentric cylindrical electrodes.

14. The process of any of the Claims 3 to 13, wherein the carbon material is an easily graphitizable carbon.

15. The process of Claim 14, wherein the easily graphitizable carbon is petroleum coke, pitch, meso-phase pitch, calcined polyvinyl chloride, carbon whisker, graphite obtained by heat treatment thereof or natural graphite.

16. The process of Claim 14 or 15, wherein the easily graphitizable carbon is heat-treated meso-phase pitch.

17. An electric cell comprising a negative electrode using a light metal as an active material, an electrolyte and a positive electrode using, as an active material, the fluorinated graphite of Claim 1 or Claim 2.

18. The electric cell of Claim 17, wherein the fluorinated graphite is obtained by the process of any of the Claims 3 to 16.

19. The electric cell of Claim 17 or 18, wherein the fluorinated graphite is treated with an alkali or potassium iodide.

20. The electric cell of Claim 19, wherein the alkali is sodium hydroxide, potassium hydroxide, aqueous ammonia or pyridine.

21. The electric cell of Claim 19 or 20, wherein the alkali is an aqueous solution having a concentration of the alkali in the range of about 0.5% by weight to about 5% by weight.

22. The electric cell of any of the Claims 19 to 21, wherein the potassium iodide is an aqueous solution of potassium iodide in the range of about 0.01N to about 0.1N.

23. The electric cell of any of the Claims 19 to 22, wherein the fluorinated graphite is the one which is obtained by subjecting an easily graphitizable carbon material to the electrolytic fluorination in hydrogen fluoride.

24. The electric cell of Claim 23, wherein the easily graphitizable carbon material is petroleum coke, pitch, meso-phase pitch, calcined polyvinyl chloride, carbon whisker, graphite obtained by heat treatment thereof, especially heat-treated meso-phase pitch, or natural graphite.

25. The electric cell of any of the Claims 17 to 24, wherein the light metal as an active material of the negative electrode is an alkali metal, alkaline earth metal, aluminum or an alloy containing as its main component any of these metals.

26. The electric cell of Claim 25, wherein the alkali metal is lithium, sodium or potassium.

27. The electric cell of any of the Claims 17 to 26, wherein the positive electrode additionally contains a binder.

28. The electric cell of any of the Claims 17 to 27, wherein the positive electrode further contains an electrically conductive agent.

29. The electric cell of any of the Claims 17 to 28, wherein the electrolyte is an aprotic organic solvent system or a protonic solvent system.

**Patentansprüche**

1. Fluorierter Graphit der Formel $(C_xF)_n$, worin x ein numerischer Wert von etwa 2,0 bis etwa 5,5 ist und n die unbestimmte Anzahl der wiederkehrenden $(C_xF)$-Einheit angibt, dadurch gekennzeichnet, daß der fluorierte Graphit eine Kristallstruktur hat, die im Röntgenbeugungsspektrum ein Peak-Maximum bei etwa 13,7° bis etwa 15,0° für den Winkel 2θ, welcher der Beugung an der (001) Ebene entspricht, aufweist, in dem durch Elektronenspektroskopie der chemischen Analyse erhaltenen Spektrum ein Peak-Maximum in der Nähe von 685,3 eV aufgrund des $F_{1s}$ und zwei Peak-Maxima in der Nähe von 287,5 eV und 284,3 eV aufgrund von $C_{1s}$, im IR-Spektrum zwei Maxima in der Nähe von 1100 cm$^{-1}$ und 1240 cm$^{-1}$ zeigt und eine elektrische Leitfähigkeit von mindestens etwa $10^{-8}\Omega^{-1}$cm$^{-1}$ besitzt und, betrachtet an dem Röntgenbeugungsspektrum, thermisch stabil an der Luft bis zu 200°C ist.

2. Fluorierter Graphit nach Anspruch 1 der Formel $(C_xF)_n$, worin x ein numerischer Wert von etwa 2,0 bis etwa 4,0 ist und n eine unbestimmte Anzahl der wiederkehrenden $(C_xF)$-Einheit anzeigt, und mit einer Kristallstruktur, die im Röntgenbeugungsspektrum ein Peak-Maximum bei etwa 13,7° bis etwa 14,8° für den Winkel 2θ zeigt, welcher der Beugung an der (001) Ebene entspricht.

3. Verfahren zur Herstellung des fluorierten Graphits gemäß Anspruch 1 oder 2, bei dem ein

## EP 0 119 595 B1

Kohlenstoffmaterial in Fluorwasserstoff in Gegenwart eines elektrisch leitfähigen Mittels der Elektrolyse bei einer Spannung von etwa 6,5 V bis etwa 15 V bei einer Temperatur von etwa −40°C bis etwa 100°C unterworfen wird.

4. Verfahren nach Anspruch 3, bei dem das elektrisch leitfähige Mittel Wasser oder ein Metallsalz ist.

5. Verfahren nach Anspruch 4, bei dem das Wasser in einem Gewichtsverhältnis von Wasser zu Fluorwasserstoff im Bereich von etwa 0,0001 bis etwa 0,01 angewendet wird.

6. Verfahren nach Anspruch 4, bei dem das elektrisch leitfähige Mittel ein Metallfluorid ist.

7. Verfahren nach Anspruch 6, bei dem das Metallfluorid in einem Mengenbereich von etwa 1 Gew.-% bis etwa 20 Gew.-%, bezogen auf das Gewicht des Fluorwasserstoffes, angewendet wird.

8. Verfahren nach Anspruch 6 oder 7, bei dem das Metallfluorid Natriumfluorid, Kaliumfluorid, Calciumfluorid oder Magnesiumfluorid ist.

9. Verfahren nach einem der Ansprüche 3 bis 8, bei dem die Elektrolyse in trockener Luft oder einem Inertgas durchgeführt wird.

10. Verfahren nach Anspruch 9, bei dem das Inertgas Stickstoff, Argon oder Helium ist.

11. Verfahren nach einem der Ansprüche 3 bis 10, bei dem die Spannung etwa 7 V bis etwa 10 V beträgt.

12. Verfahren nach einem der Ansprüche 3 bis 11, bei dem die Elektrolysetemperatur etwa −30 bis etwa 20°C beträgt.

13. Verfahren nach einem der Ansprüche 3 bis 12, bei dem die Elektroden konzentrische zylindrische Elektroden sind.

14. Verfahren nach einem der Ansprüche 3 bis 13, bei dem das Kohlenstoffmaterial eine leicht graphitisierbare Kohle ist.

15. Verfahren nach Anspruch 14, bei dem die leicht graphitisierbare Kohle Petrolkoks, Pech, Mesophasenpech, kalziniertes (verkohltes) Polyvinylchlorid, Kohlenstoff - Whiskers, durch Wärmebehandlung der obigen Materialien erhaltener Graphit oder ein natürlicher Graphit ist.

16. Verfahren nach Anspruch 14 oder 15, bei dem die leicht graphitisierbare Kohle wärmebehandeltes Mesophasenpech ist.

17. Elektrische Zelle, die eine negative Elektrode, in der ein Leichtmetall als aktives Material vorliegt, einen Elektrolyten und eine positive Elektrode umfaßt, in der als aktives Material der fluorierte Graphit gemäß Anspruch 1 oder 2 vorliegt.

18. Elektrische Zelle nach Anspruch 17, worin der fluorierte Graphit mit Hilfe des Verfahrens gemäß einem der Ansprüche 3 bis 16 erhalten worden ist.

19. Elektrische Zelle nach Anspruch 17 oder 18, worin der fluorierte Graphit mit Alkali oder mit Kaliumiodid behandelt worden ist.

20. Elektrische Zelle nach Anspruch 19, wobei das Alkali Natriumhydroxid, Kaliumhydroxid, wässeriges Ammoniak oder Pyridin ist.

21. Elektrische Zelle nach Anspruch 19 oder 20, wobei das Alkali eine wässerige Lösung mit einer Konzentration der alkalischen Substanz im Bereich von etwa 0,5 Gew.-% bis etwa 5 Gew.-% ist.

22. Elektrische Zelle nach einem der Ansprüche 19 bis 21, wobei das Kaliumiodid eine wässerige Lösung von Kaliumiodid einer Konzentration im Bereich von etwa 0,01 n bis etwa 0,1 n ist.

23. Elektrische Zelle nach einem der Ansprüche 19 bis 22, worin der fluorierte Graphit erhalten wurde, indem ein leicht graphitisierbares Kohlenstoffmaterial der elektrolytischen Fluorierung in Fluorwasserstoff unterworfen wurde.

24. Elektrische Zelle nach Anspruch 23, wobei das leicht graphitisierbare Kohlenstoffmaterial Petrolkoks, Pech, Mesophasenpech, kalziniertes (verkohltes) Polyvinylchlorid, Kohlenstoff - Whiskers, durch Wärmebehandlung dieser Materialien erhaltener Graphit, insbesondere wärmebehandeltes Mesophasenpech, oder natürlicher Graphit ist.

25. Elektrische Zelle nach einem der Ansprüche 17 bis 24, in der das als aktives Material der negativen Elektrode vorliegende Leichtmetall ein Alkalimetall, Erdalkalimetall, Aluminium oder eine Legierung ist, die als Hauptkomponente eines dieser Metalle enthält.

26. Elektrische Zelle nach Anspruch 25, worin das Alkalimetall Lithium, Natrium oder Kalium ist.

27. Elektrische Zelle nach einem der Ansprüche 17 bis 26, worin die positive Elektrode zusätzlich ein Bindemittel enthält.

28. Elektrische Zelle nach einem der Ansprüche 17 bis 27, worin die positive Elektrode zusätzlich ein elektrisch leitfähiges Mittel enthält.

29. Elektrische Zelle nach einem der Ansprüche 17 bis 28, worin der Elektrolyt ein aprotisches organisches Lösungsmittelsystem oder ein protonisches Lösungsmittelsystem ist.


**Revendications**

1. Graphite fluoré de formule $(C_xF)_n$ dans laquelle x est une valeur numérique comprise entre 2,0 et 5,5 environ, et n représente un nombre indéfini du motif récurrent $(C_xF)$, caractérisé en ce que le graphite fluoré a une structure cristalline présentant un pic entre 13,7° et 15,0° environ exprimé par l'angle de $2\theta$ correspondant à la diffraction dans le plan (001) du diagramme de diffraction de rayons X, un pic à proximité de 685,3 eV dû à $F_{1s}$ et deux pics à proximité de 287,5 eV et de 284,3 eV dus au $C_{1s}$ dans le spectre

12

# EP 0 119 595 B1

de spectroscopie électronique d'analyse chimique, deux pics à proximité de 1100 cm$^{-1}$ et de 1240 cm$^{-1}$ dans le spectre infrarouge et une conductibilité électrique d'au moins $10^{-8}\Omega^{-1}$cm$^{-1}$ environ, et est stable thermiquement dans l'air jusqu'à 200°C du point de vue du diagramme de diffraction des rayons X.

2. Le graphite fluoré de la revendication 1 qui a la formule $(C_xF)_n$, dans laquelle x est une valeur numérique allant de 2,0 à 4,0 environ et n représente un nombre indéfini du motif récurrent $(C_xF)$ et une structure cristalline présentant un pic entre 13,7° et 14,8° environ exprimé par l'angle de $2\theta$ correspondant à la diffraction dans le plan (001) du diagramme de diffraction des rayons X.

3. Procédé de préparation du graphite fluoré de la revendication 1 ou de la revendication 2, qui consiste à soumettre une matière carbonée à une électrolyse dans du fluorure d'hydrogène sous une tension de 6,5 V à 15 V environ, à une température de −40°C à 100°C environ, en la présence d'un agent conducteur de l'électricité.

4. Le procédé de la revendication 3, dans lequel l'agent conducteur de l'électricité est de l'eau ou un sel métallique.

5. Le procédé de la revendication 4, dans lequel l'eau est utilisée en un rapport pondéral de l'eau au fluorure d'hydrogène, de 0,0001 à 0,01 environ.

6. Le procédé de la revendication 4, dans lequel l'agent conducteur de l'électricité est un fluorure métallique.

7. Le procédé de la revendication 6, dans lequel le fluorure métallique est utilisé en une quantité représentant de 1% à 20% environ du poids du fluorure d'hydrogène.

8. Le procédé de la revendication 6 ou 7, dans lequel le fluorure métallique est du fluorure de sodium, du fluorure de potassium, du florure de calcium ou du fluorure de magnésium.

9. Le procédé suivant l'une quelconque des revendications 3 à 8, dans lequel l'électrolyse est effectuée dans de l'air sec ou dans un gaz inerte.

10. Le procédé de la revendication 9, dans lequel le gaz inerte est de l'azote, de l'argon ou de l'hélium.

11. Le procédé suivant l'une quelconque des revendications 3 à 10, dans lequel le tension est comprise entre 7V et 10V environ.

12. Le procédé suivant l'une quelconque des revendications 3 à 11, dans lequel la température d'électrolyse est comprise entre −30°C et 20°C environ.

13. Le procédé suivant l'une quelconque des revendications 3 à 12, dans lequel les électrodes sont des électrodes cylindriques concentriques.

14. Le procédé suivant l'une quelconque des revendications 3 à 13, dans lequel la matière carbonée est un carbone susceptible d'être graphité facilement.

15. Le procédé de la revendication 14, dans lequel le carbone susceptible d'être graphité facilement est du coke de pétrole, du brai, du brai mésomorphe, du poly(chlorure de vinyle) calciné, de la trichite de carbone, du graphite obtenu par traitement thermique de celle-ci ou du graphite naturel.

16. Le procédé de la revendication 14 ou 15, dans lequel le carbone susceptible d'être graphité facilement est du brai mésomorphe traité thermiquement.

17. Pile électrique comprenant une électrode négative utilisant un métal léger comme matière active, un électrolyte et une électrode positive utilisant comme matière active le graphite fluoré de la revendication 1 ou de la revendication 2.

18. La pile électrique de la revendication 17, dans laquelle le graphite fluoré est obtenu par le procédé suivant l'une quelconque des revendications 3 à 16.

19. La pile électrique de la revendication 17 ou 18, dans laquelle le graphite fluoré est traité par un agent alcalin ou par de l'iodure de potassium.

20. La pile électrique de la revendication 19, dans laquelle l'agent alcalin est de l'hydroxyde de sodium, de l'hydroxyde de potassium, de l'ammoniaque ou de la pyridine.

21. La pile électrique de la revendication 19 ou 20, dans laquelle l'agent alcalin est une solution aqueuse ayant une concentration de l'agent alcalin comprise entre 0,5 et 5% en poids environ.

22. La pile électrique de l'une quelconque des revendications 19 à 21, dans laquelle l'iodure de potassium est une solution aqueuse d'iodure de potassium de 0,01 N à 0,1 N environ.

23. La pile électrique de l'une quelconque des revendications 19 à 22, dans laquelle le graphite fluoré est celui obtenu en soumettant une matière carbonée susceptible d'être graphitée facilement à la fluoration électrolytique dans du fluorure d'hydrogène.

24. La pile électrique de la revendication 23, dans laquelle la matière carbonée susceptible d'être graphitée facilement est du coke de pétrole, du brai, du brai mésomorphe, du chlorure de vinyle calciné, de la trichite de carbone, du graphite obtenu par traitement thermique de celle-ci, en particulier du brai mésomorphe traité thermiquement ou du graphite naturel.

25. La pile électrique de l'une quelconque des revendications 17 à 24, dans laquelle le métal léger servant de matière active de l'électrode négative est un métal alcalin, un métal alcalino-terreux, de l'aluminium ou un alliage contenant, comme constituant principal, l'un quelconque des ces métaux.

26. La pile électrique de la revendication 25, dans laquelle le métal alcalin est du lithium, du sodium ou du potassium.

27. La pile électrique suivant l'une quelconque des revendications 17 à 26, dans laquelle l'électrode positive contient, en outre, un liant.

28. La pile électrique de l'une quelconque des revendications 17 à 27, dans laquelle l'électrode positive contient, en outre, un agent conducteur de l'électricité.

29. La pile électrique de l'une quelconque des revendications 17 à 28, dans laquelle l'électrolyte est un système aprotique de solvant organique ou est un système protonique de solvant.

# F I G. 1

$2\theta = 14.5°$

(OOl)

(lOO)

INTENSITY (cps)

2θ ( degree )

0    lO    20    30    40    50

# FIG. 2

TRANSMITTANCE (%)

WAVE NUMBER (cm⁻¹)

4000  3500  3000      2000      1600      1200      800      400

# F I G. 3

# FIG. 4

# F I G. 5

EP 0 119 595 B1

# FIG. 6